# EUROPEAN PATENT SPECIFICATION

(11) **EP 0 906 653 B1**
(45) Date of publication and mention of the grant of the patent: **02.01.2002**
(21) Application number: 97928568.1
(22) Date of filing: 03.06.1997
(51) Int. Cl.: H02M 1/12, H02J 1/02

(54) **FILTER EQUIPMENT**
FILTERAUSRÜSTUNG
EQUIPEMENT DE FILTRAGE

(30) Priority: 17.06.1996 SE 9602367
(43) Date of publication of application: 07.04.1999
(73) Proprietor: ABB AB, 721 83 Västeras (SE)
(72) Inventor: ANDERSSON, Lars, S-771 92 Ludvika (SE); HOLMGREN, Tommy, S-771 43 Ludvika (SE)
(86) International application number: SE9700959
(87) International publication number: WO9749167

(56) References cited:
- EP-A- 0 654 883
- US-A- 1 808 031
- US-A- 4 224 660

## Description

### TECHNICAL FIELD

The present invention relates to filter equipment for an installation for power transmission by means of high-voltage direct current (HVDC). The equipment has a plurality of branches tuned to different frequencies. Each one of these branches comprises a main capacitor and an inductor. The main capacitor in each branch comprises a plurality of series-connected capacitor units arranged in a substantially vertical stand.

### BACKGROUND ART

The converters in an HVDC installation generate harmonics, and to reduce the amplitudes of these harmonics, converter stations in an HVDC installation are provided with harmonic filters both on the ac side and on the dc side of the converters. The filter equipment becomes large and space-demanding and makes up a considerable part of the cost and space requirement of a converter station.

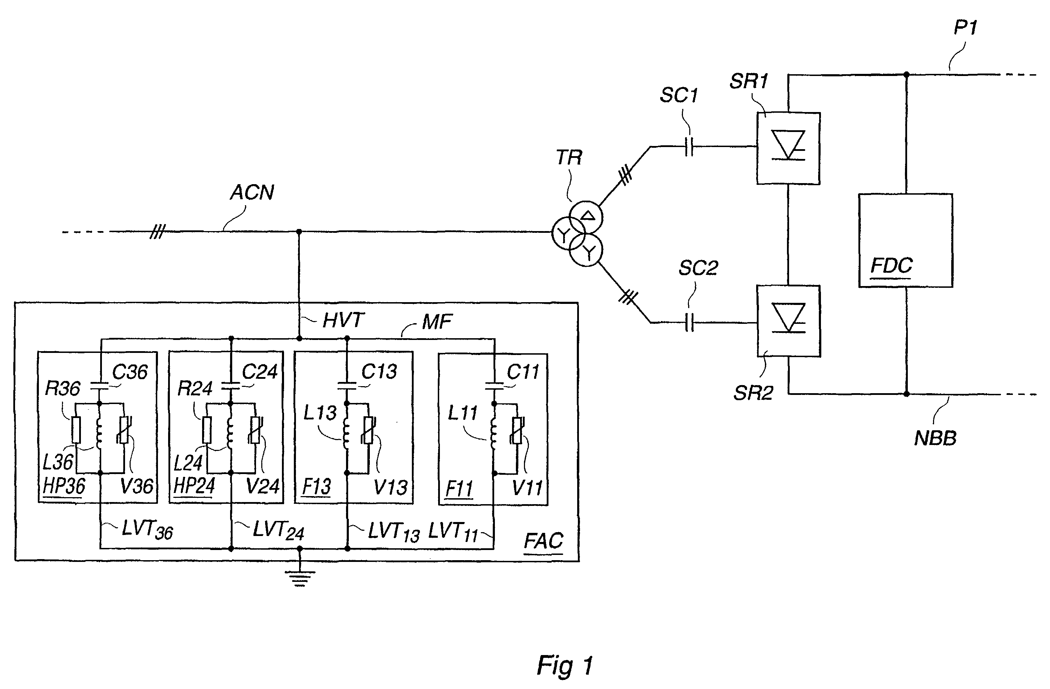

Filter equipment of the kind referred to here has a plurality of branches, each one tuned to one or more harmonics. Figure 1 shows a typical example of a known 12-pulse single-pole converter station with converters SR1 and SR2, which via a transformer TR and series-capacitors SC1 and SC2 are connected to a three-phase ac network ACN. On the ac side of the station, filter equipment FAC is connected between the network and ground. On the dc side of the station, filter equipment FDC is connected between the poles P1 of the station and the neutral busbar NBB of the station.

The filter equipment FAC comprises four filter branches. The branch F11 is a series circuit, tuned to the 11th harmonic (550 Hz at 12-pulse operation and 50 Hz mains frequency), with a capacitor C11 and an inductor L11 as well as a surge arrester V11 as overvoltage protection device across the inductor. The branch F13 is a series circuit, tuned to the 13th harmonic, with the capacitor C13, the inductor L13 and the surge arrester V13. The branch HP24 is a series circuit, tuned to the 24th harmonic, with the capacitor C24, the inductor L24, the resistor R24 and the surge arrester V24. The branch HP36 is a series circuit, tuned to the 36th harmonic, with the capacitor C36, the inductor L36, the resistor R36 and the surge arrester V36. The last two branches have a band width adapted such that they damp the harmonics of the orders 23, 25 and 35, 37, respectively. The resistors R24 and R36 give the branches suitable quality factors. The quality factor is chosen to be considerably lower for the branch HP36 than for the branch HP24 and so low that the branch HP36 obtains high-pass characteristic and damps also higher order harmonics, for example the harmonics of the orders 47 and 49.

The filter equipment FAC is shown in the figure in the form of a single-line diagram, and each one of the branches shown in the figure therefore consists of three branches, one for each phase.

The filter branches have capacitive characteristic at the fundamental frequency. At least certain of the branches are therefore often dimensioned with such large capacitors that, at the fundamental frequency, they generate a reactive power which at least partially compensates for the relatively high consumption of reactive power by a conventional converter station. Certain types of converters, for example the series-capacitor-connected converters (Capacitor Commutated Converters, CCC) shown in Figure 1, however, have a low consumption of reactive power. Then all the branches can be dimensioned only in view of the harmonic damping, and the capacitors become relatively small.

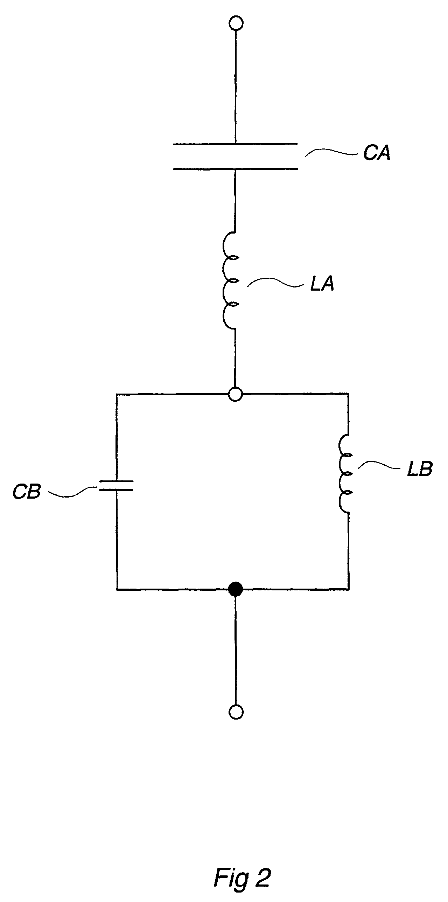

The filter branches may, in a known way, be designed as double-tuned filter circuits, for example according to Figure 2 which shows a double-tuned filter for the harmonics of the orders 11 and 13. The filter has a main capacitor CA in series with an inductor LA. This series circuit is series-connected to the parallel circuit consisting of the capacitor CB and the inductor LB. The main capacitor CA is dimensioned for the desired degree of reactive-power generation, and this capacitor takes up the predominant part of the line voltage at the fundamental frequency.

In the single-tuned branches shown in Figure 1, one of the capacitors in each branch constitutes in a known way the main capacitor of the branch and takes up the predominant part of the line voltage at the fundamental frequency.

Each one of the main capacitors of the filter branches comprises a number of series-connected (and possibly also parallel-connected) capacitor units which are arranged in a substantially vertical stand. One typical such stand consists of four insulator columns which support a number of capacitor racks disposed at regular intervals one above the other. Each rack comprises a metal frame which supports a number of series- and/or parallel-connected capacitor units and is electrically connected to the casings of the capacitor units arranged on the racks. Each capacitor unit comprises a plurality of wound foil capacitors applied in a metal casing with one or more bushings. The bushings are the electrical terminals of the unit (alternatively, the casing may constitute one of the connections). The stand has a high-voltage terminal at the top, and a low-voltage terminal at the bottom. Such a stand with the racks and capacitor units arranged therein will be referred to in the following as a capacitor stack.

The filter equipment FDC arranged on the dc side of the station is designed in a way similar to that of the equipment FAC, but has its low-voltage terminal connected to the neutral busbar of the station.

In filter equipment of this known kind, the main capacitors of the filter branches may be designed as separate capacitor stands. The equipment will then have the same number of stands as the filter has branches, and the number of insulators, base plates, high-voltage terminals, etc., will be high. Such equipment is therefore expensive and requires large ground space. Such equipment is especially unfavourable at high operating voltages and in those cases where no or low demands are placed on the reactive-power generation. In these cases, the number of capacitor units per "storey" is low and the number of insulators, racks, etc., becomes large in relation to the quantity of capacitor units.

It is also known to design the filter branches in the form of double-tuned or possibly triple-tuned branches. The number of main capacitors in the filter equipment is then reduced to a corresponding extent, as is the number of capacitor stands. Both the cost and the space requirement of the filter equipment are then reduced. A considerable disadvantage, however, is that the quality factor for the different frequencies of the branch cannot be chosen independently of each other. In filter branches which have controllable inductors, an increase of the control ranges in relation to what is the case with single-tuned filter branches is required, and this results in an increased cost of the inductors.

In a third embodiment, the main capacitors of two or more filter branches are arranged in the same stand, and one and the same rack thus supports the capacitor units which are included in different main capacitors. The fundamental-frequency voltage (direct voltage on the dc side) is largely uniformly distributed along the stacks, and the fundamental-frequency voltage difference between capacitor units arranged on the same rack is low. The harmonic-frequency voltage differences between such capacitor units may, however, be high. Since the casings of the capacitor units on the same storey are potentially connected via the racks, the maximally allowed voltage difference is limited by the insulation of the capacitor units between the bushing and the casing. This embodiment is, therefore, not useful at high voltages (actually, high harmonic voltages = harmonic current x impedance).

Document EP 654 883 describes a filter equipment of the prior art mentioned above.

### SUMMARY OF THE INVENTION

The object of the invention is to provide filter equipment of the kind stated in the introductory part of the description, which is simpler and less expensive and has reduced space requirement in relation to prior art equipment, while at the same time the filter branches for the different frequencies may be dimensioned (and possibly the inductors controlled) completely independently of each other. The invention is particularly aimed at achieving filter equipment which is suited for use at high voltages and in such installations where the need of generation of reactive power is low.

What characterizes a method and an installation according to the invention will become clear from the appended claims.

### BRIEF DESCRIPTION OF THE DRAWINGS

The invention will be described, in the following, in greater detail with reference to the accompanying Figures 1-6. Figure 1 is a circuit diagram of a converter station with pieces of filter equipment according to the prior art Figure 2 shows a circuit diagram of a double-tuned filter branch. Figures 3a to 3c the physical composition of the capacitor stand in filter equipment according to one embodiment of the invention Figures 4a and 4b show how the capacitor stand of the filter equipment and other components are arranged in relation to each other. Figure 5 shows a capacitor stand according to another embodiment of the invention. Figures 6a and 6b show an alternative method of arranging the capacitor stand and other components in relation to each other.

### DESCRIPTION OF THE PREFERRED EMBODIMENTS

Figures 1 and 2 have already been described above.

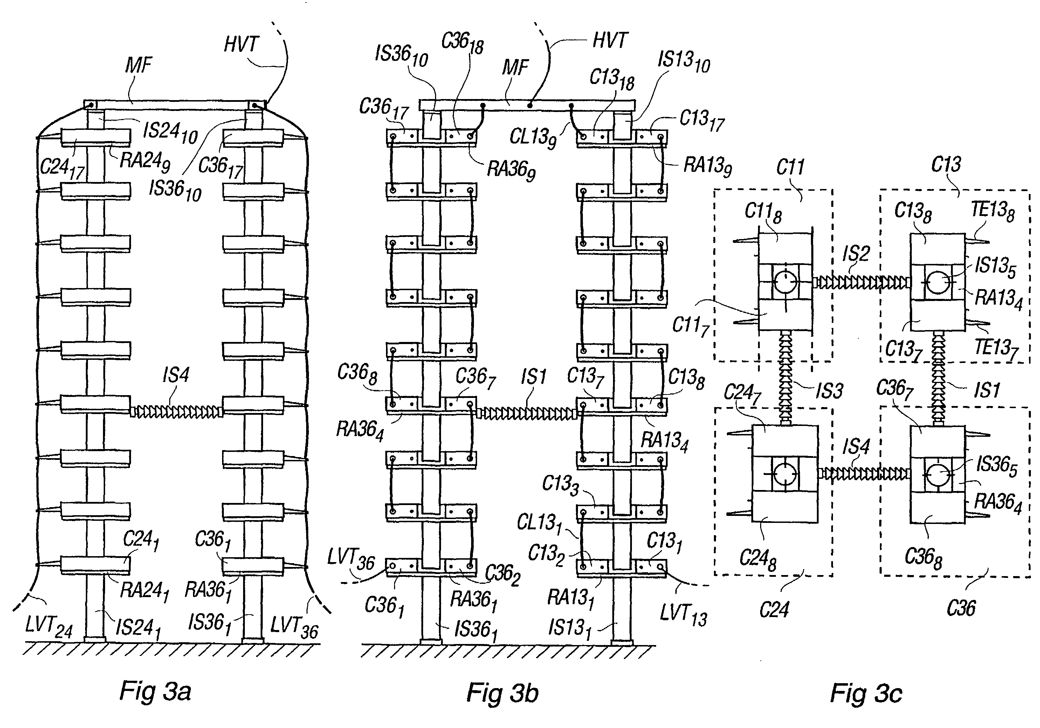

Figures 3a to 3c show how, according to one embodiment of the invention, in filter equipment according to Figure 1, the four capacitor stacks of the equipment may be arranged in a common stand. Figure 3a and Figure 3b show the stand viewed in two directions perpendicular to each other. Figure 3c shows, viewed from above, a section through the stand in a plane immediately above the racks RA11₄, RA13₄, etc.

The stand comprises the four capacitor stacks, each one constituting one of the four main capacitors C11, C13, C24, C36 of the equipment. The stacks are all composed in a similar way, and as an example the capacitor stack C13 will be described. It has 18 series-connected capacitor units C13₁ - C13₁₈. The units are applied two-by-two on metal frames or racks RA13₁ - RA13₉. The casing of each unit is electrically connected to the rack, which thus forms the electrical connection between the two capacitor units mounted on the racks. Each unit has a bushing, for example TE13₇ and TE13₈ of the units C13₇ and C13₁₈. To the bushing of the lowermost capacitor unit C13₁, the low-voltage terminal LVT₁₃ of the capacitor stack is connected. The units are interconnected in the vertical direction with the aid of conductors, for example the units C13₂ and C13₃ with the aid of the conductor CL13₁. The bushing of the uppermost capacitor unit C13₁₈ is connected, by means of a conductor CL13₉, to a rectangular metal frame MF which mechanically and electrically connects the upper ends of the four stacks.

The racks of the capacitor stack C13 is supported by an insulator column which comprises the sections IS13₁ - IS13₁₀ placed one above the other.

The other three stacks C11, C24 and C36 are, in the example shown, composed in exactly the same way as the stack C13 now described, and the components included in these stacks are designated in the same way as the components in the stack C13.

The metal frame MF mechanically connects the upper ends of the four stacks, which gives the stand a construction which is very stable and resistant to wind forces and seismic forces. The frame MF also electrically connects the upper ends of the stacks. The frame is provided with one single high-voltage terminal HVT common to the four capacitor stacks.

To increase the mechanical stability of the structure, the stacks are interconnected, at a suitable distance from their ends, with the aid of electrically insulated cross bars. In the example shown, thus, four insulators IS1 - IS4 are mounted between the racks RA11₄, RA13₄, RA24₄ and RA36₄.

As mentioned above, during operation practically the whole fundamental-frequency voltage across each filter branch will be taken up over the main capacitor of the branch. This means that the potentials of those parts of the four stacks which are disposed in each horizontal plane will be almost identical, and no mentionable fundamental-frequency voltage differences will arise in the horizontal direction between the stacks. For the harmonics, on the other hand, the conditions are different. The harmonic-frequency voltages of the various stacks generally have different amplitude and frequency. The upper ends of the stacks are, of course, electrically connected to each other and harmonic-frequency voltage differences between the stacks, increasing from above and downwards, may thus arise during operation. These voltage differences are greatest at the lowermost part of the stacks. The maximum voltage along each stack is determined by the product of the maximum harmonic current and the impedance of the capacitor at the harmonic frequency. Since in two different stacks these voltages may be in opposition to each other during part of the fundamental-frequency period, the maximum voltage difference between two stacks will be the sum of the above-mentioned stack voltages. The horizontal distance between the capacitor stacks is adapted such that the required insulation distance is obtained to take up the maximum voltage differences arising.

It has been found that a capacitor stand according to the invention typically has moderate dimensions; for example in an installation for the operating voltage 400 kV, the stand has a horizontal extent of about 3 m x 3 m and a height of about 8 m.

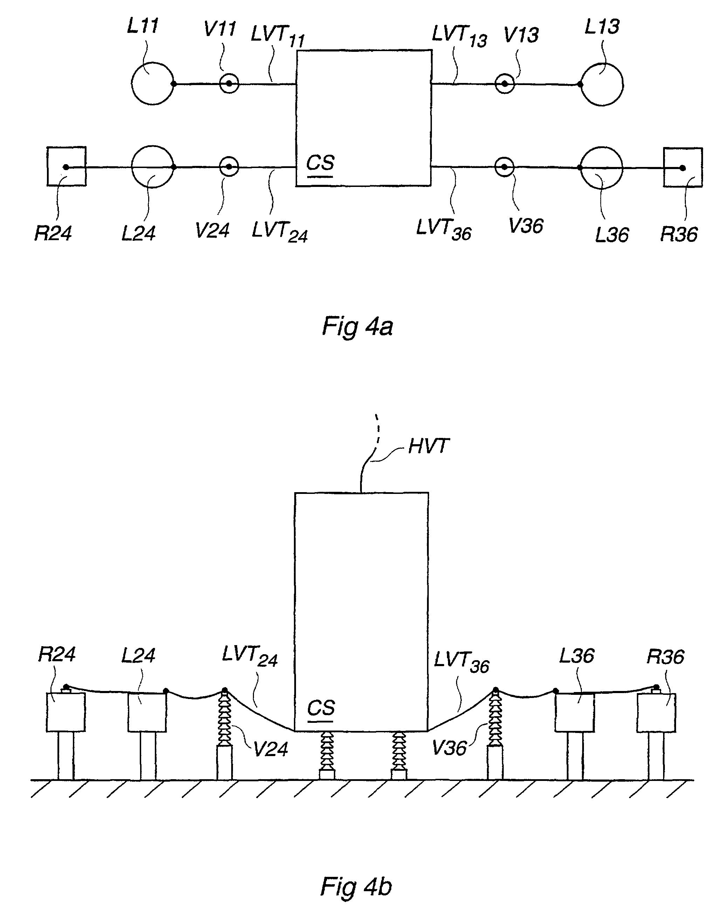

Figure 4a shows schematically the whole filter equipment FAC as viewed from above, and Figure 4b shows the equipment as viewed from the side. For simplicity's sake, the capacitor stand is shown as a rectangular block CS. Adjacent thereto, the other components of the equipment are placed. The surge arrester V11 and the inductor L11 are connected to the low-voltage terminal LVT₁₁ of the stack C11. The surge arrester V13 and the inductor L13 are connected to the low-voltage terminal LVT₁₃ of the stack C13. The surge arrester V24, the inductor L24 and the resistor R24 are connected to the low-voltage terminal LVT₂₄ of the stack C24. The surge arrester V36, the inductor L36 and the resistor R36 are connected to the low-voltage terminal LVT₃₆ of the stack C36.

In filter equipment according to the invention, as is clear from the above, the different filter branches of the equipment are electrically separated from each other and may each one be dimensioned (and, where applicable, controlled) optimally and independently of one another. The equipment may be used without difficulty for the highest operating voltages occurring. At the same time, the number of insulators,racks, base plates, high-voltage terminals, etc., are greatly reduced compared with the corresponding prior art equipment, and this without reducing the resistance of the equipment to mechanical stresses. The ground requirement and the cost of the equipment are also considerably lower.

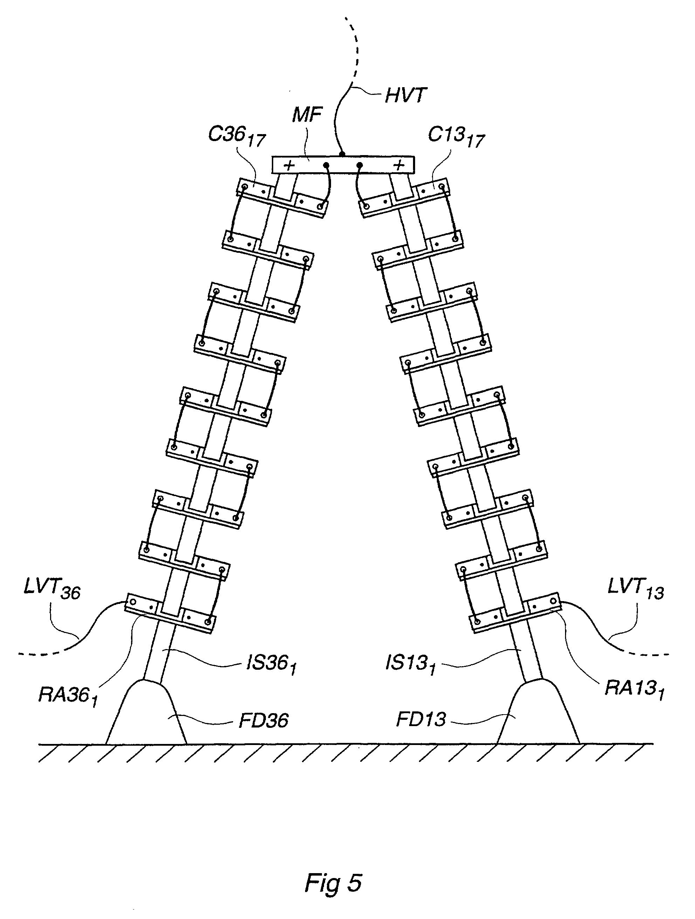

Figure 5 shows another embodiment of a capacitor stand according to the invention. The embodiment makes use of the fact that the voltage differences arising between the stacks are zero in the uppermost part of the stand and greatest at the bottom. Therefore, the stacks are placed at the greatest distance from each other at the bottom, and the stacks are inclined inwards towards each other such that the distance is lowest at the top, where the stacks are held together by the metal frame MF. As in the example described above, the capacitor stand comprises four stacks. Of these, the stacks C13 and C36 are shown in the figure. The stacks rest on four base plates which are each arranged in a corner of a square. The base plates FD13 and FD36 are shown in the figure. The stack C13 and the stack C11 (not shown) are inclined to the left in the figure and the stack C36 and the stack C24 (not shown) are inclined to the right. Further, the stacks C11 and C13 are inclined inwards towards each other, as are the stacks C24 and C36, whereby the four stacks will constitute side edges of a regular four-sided pyramid. To make possible simple mounting, the stacks are suitably designed rotatable around horizontal axes or joints in the base plates (not shown in the figure) in such a way that each stack can be mounted with the stack vertically, whereupon it is rotated to its final position and is connected at its upper end to the other stacks.

The embodiment according to Figure 5 gives increased resistance to mechanical stresses.

Alternatively, the stand according to Figure 5 may be provided with transverse bindings of the kind shown in Figure 3 to further increase the mechanical stability of the stand.

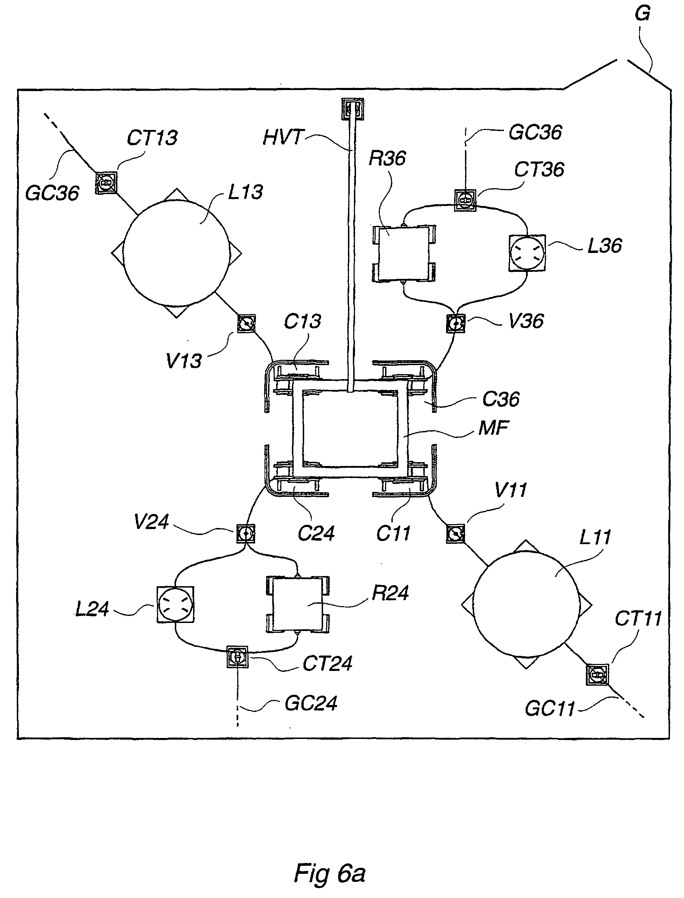

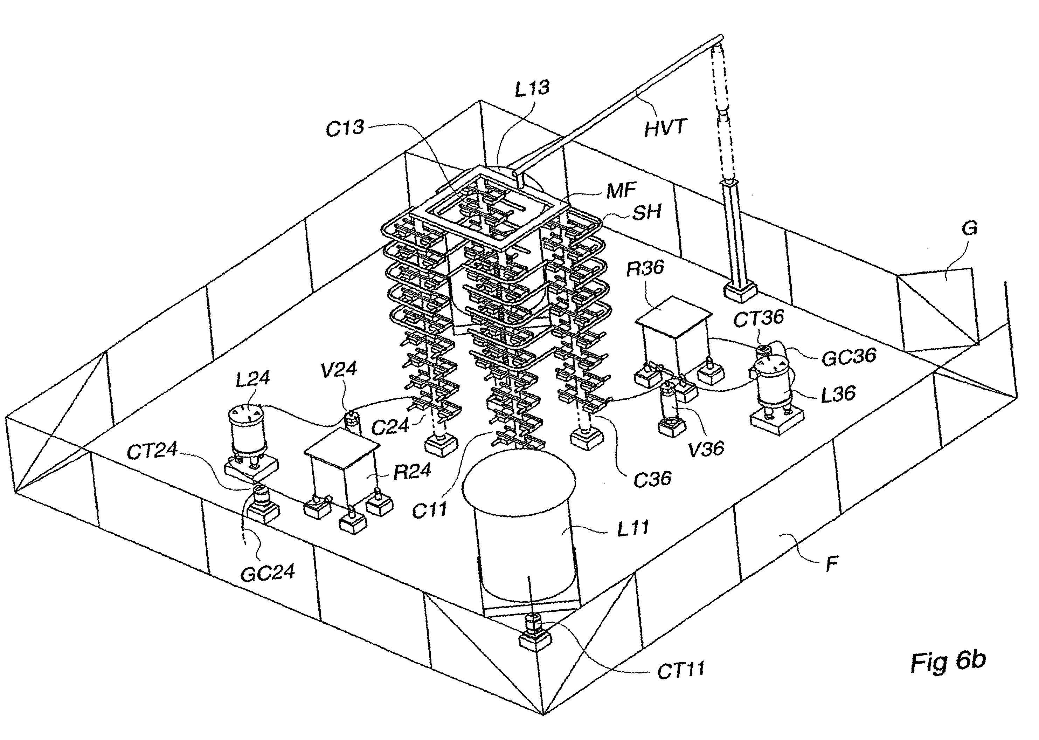

Figures 6a and 6b show an alternative embodiment of filter equipment according to the invention, Figure 6a shows the equipment as viewed from above and Figure 6b a perspective view of the equipment. In the same way as described above, the equipment comprises four filter branches, two branches for the 11th and 13th harmonics and two branches with high-pass characteristic tuned to the harmonics of the orders 24 and 36. As the examples described above, the capacitor stand has four capacitor stacks C11, C13, C24 and C36, which at their upper ends are mechanically and electrically interconnected by means of a metal frame MF, which in turn is connected to a high-voltage terminal HVT. In its upper part, where the voltages are highest, the capacitor stand is provided with corona shields, for example the shield designated SH. In addition, the filter branches comprise the inductors L11, L13, L24 and L36, the surge arresters V11, V13, V24 and V36 as well as the resistors R24 and R36. In addition, the filter branches are connected to ground with the aid of the conductors GC11, GC13, GC24 and GC36. In these conductors, current transformers CT11, CT13, CT24 CT36 are connected for measurement of the currents in the filter branches. The equipment is surrounded by a fence F with a gate G.

In the two filter branches C11 and C13, the protective voltages of the surge arresters are higher than in the other two branches. It is therefore advantageous, as in the equipment according to Figure 6, to arrange these two branches diagonally opposite to each other and utilize the larger insulation distance between the branches provided by this location of the branches.

One problem with filter equipment of the kind referred to here is the often annoyingly high sound level from the capacitors. It is known to reduce the sound level by arranging sound-absorbing boxes on each rack, which surround the capacitor units placed on the racks. This is a complicated and costly solution. Another method of reducing the sound level is to provide the capacitor units with internal damping means, for example in the way described in Swedish patent application 9402178-9 (corresponding to US Patent No. 5,563,763). In equipment according to the invention, the filter branches are completely separate. The sound level is often highest for the 11th to 13th harmonic filters. For these, the internal damping means may then be designed with a narrow band width and such a high degree of damping that additional damping measures, for example in the form of the above-mentioned sound-absorbing boxes, become superfluous.

The embodiments of the invention described above are only an example.

Thus, the invention may be applied also to other types of filter equipment than those described above, for example in filter equipment on the direct-voltage side, in equipment with another number of branches than four (e.g. three branches), at other pulse numbers than 12 (e.g. 6), in other types of converters than the series-capacitor-connected converters described above.

In, for example, filter equipment with three branches, the lower parts of the three capacitor stacks may be placed on base plates located in the corners of a triangle and inclined towards each other so as to form a tetrahedron.

The invention provides the greatest advantages when the filter branches are single-tuned, but the invention may also be applied to equipment where one or more of the branches are double-tuned or possibly triple-tuned. It is then the main capacitors of these multiple-tuned branches that are arranged in stacks in the manner described above. In an alternative embodiment, filter equipment according to the invention may be designed with two double-tuned branches, one branch for the harmonics of the 11th and 13th orders and one branch with high-pass characteristic and tuned to the 24th and 36th harmonics. These branches then have one main capacitor each, which each form a capacitor stack. These two stacks can then be arranged to form a capacitor stand together with an auxiliary stack. The three stacks are then placed, for example, vertically and each in a respective corner of a triangle. The auxiliary stack then only serves the function of giving the stand the necessary mechanical strength and stability and may, for example, consist of an insulator column. In the event that it is made of metal, the necessary electrical insulation must be arranged between the auxiliary stack and the high-voltage terminal of the stand. Alternatively, the three stacks now mentioned may be arranged inclined towards each other so as to form a tetrahedron.

In the embodiments of the invention described above, in each branch the main capacitor is placed nearest to the high-voltage terminal of the branch. Even if this location is advantageous, the capacitor may, in principle, within the scope of the invention, be placed in some other location, for example nearest to the connection of the branch to ground or a neutral bar.

Further, in the embodiments of the invention described above, the number of racks is the same in the different branches. Alternatively, however, the branches may have a different number of racks between themselves.

The metal frame described in the embodiments described above, which mechanically and electrically connects the upper parts of the capacitor stacks, may alternatively consist of, for example, a frame of glass-fibre-reinforced plastic, which provides the mechanical connection, in combination with copper conductors which provide the required electrical connections.

## Claims

1. Filter equipment for an installation for power transmission by means of high-voltage direct current (HVDC),
which equipment has a plurality of branches (F11, F13, HP24, HP36) tuned to different frequencies,
wherein each branch (e.g. F11) comprises a main capacitor (C11) and an inductor (L11), and
wherein the main capacitor (e.g. C11) in each branch comprises a plurality of series-connected capacitor units (C11₁-C11₁₈) arranged in a substantially vertical stand,
**characterized in that**
the main capacitors (C11, C13, C24, C36) for at least two branches are arranged in one and the same stand,
with each main capacitor in a separate capacitor stack,
the stacks are electrically and mechanically interconnected at one end, and that
the stacks are otherwise separated and arranged at such large distance from one another that the required insulation distance is obtained between the stacks.

2. Filter equipment according to claim 1, **characterized in that** the upper ends of the stacks are mechanically and electrically interconnected.

3. Filter equipment according to claim 2, **characterized in that** the stacks are interconnected by means of a frame of metal (MF).

4. Filter equipment according to any of claims 2-3, **characterized in that** the upper ends of the stacks have a common high-voltage terminal (HVT).

5. Filter equipment according to any of the preceding claims, **characterized in that** electrically insulating transverse connections (IS1-IS4) between the stacks are arranged at a distance from the ends of the stacks.

6. Filter equipment according to any of the preceding claims, **characterized in that** stacks are arranged inclined in relation to each other in such a way that the distances between the stacks decrease in a direction towards that end where the stacks are connected to each other.

7. Filter equipment according to claim 6, **characterized in that** the lower ends of the stacks are arranged on base plates (FD13, FD36) at a distance from each other and that the mutual distances of the stacks decrease in a direction towards the upper ends of the stacks, where the stacks are connected to each other.

## Patentansprüche

1. Filtereinrichtung für eine Vorrichtung zur Leistungsübertragung mittels Hochspannungsgleichstrom (HVDC),
wobei die Einrichtung mehrere auf verschiedene Frequenzen abgestimmte Abzweigungen (F11, F13, HP24, HP36) aufweist,
wobei jede Abzweigung (beispielsweise F11) einen Hauptkondensator (C11) und eine Drosselspule (L11) umfasst, und
wobei der Hauptkondensator (beispielsweise C11) in jeder Abzweigung mehrere in Reihe geschalteten Kondensatoreinheiten (C11₁-C11₁₈) umfasst, die in einem im wesentlichen senkrechten Ständer angeordnet sind,
**dadurch gekennzeichnet, dass**
die Hauptkondensatoren (C11, C13, C24, C36) für mindestens zwei Abzweigungen in ein und dem selben Ständer angeordnet sind,
wobei jeder Hauptkondensator in einer separaten Kondensatorbaugruppe ist,
wobei die Baugruppen an einem Ende elektrisch und mechanisch miteinander verbunden sind, und dass
die Baugruppen sonst getrennt und mit so einem großen Abstand voneinander angeordnet sind, dass der erforderliche Isolationsabstand zwischen den Baugruppen erhalten wird.

2. Filtereinrichtung gemäß Anspruch 1, **dadurch gekennzeichnet, dass** die oberen Enden der Baugruppen mechanisch und elektrisch miteinander verbunden sind.

3. Filtereinrichtung gemäß Anspruch 2, **dadurch gekennzeichnet, dass** die Baugruppen mittels eines Rahmens aus Metall (MF) miteinander verbunden sind.

4. Filtereinrichtung gemäß irgendeinem der Ansprüche 2-3, **dadurch gekennzeichnet, dass** die oberen Enden der Baugruppen einen gemeinsamen Hochspannungsanschluss (HVT) aufweisen.

5. Filtereinrichtung gemäß irgendeinem der vorstehenden Ansprüche, **dadurch gekennzeichnet, dass** zwischen den Baugruppen elektrisch isolierende Querverbindungen (IS1-IS4) mit einem Abstand von den Enden der Baugruppen angeordnet sind.

6. Filtereinrichtung gemäß irgendeinem der vorstehenden Ansprüche, **dadurch gekennzeichnet, dass** die Baugruppen derart im Verhältnis zueinander geneigt angeordnet sind, daß der Abstand zwischen den Baugruppen in Richtung auf das Ende abnimmt, an dem die Baugruppen miteinander verbunden sind.

7. Filtereinrichtung gemäß Anspruch 6, **dadurch gekennzeichnet, dass** die unteren Enden der Baugruppen auf Grundplatten (FD13, FD36) mit einem Abstand voneinander angeordnet sind, und dass die gegenseitigen Abstände der Baugruppen in Richtung auf die oberen Enden der Baugruppen abnehmen, an denen die Baugruppen miteinander verbunden sind.

## Revendications

1. Equipement formant filtre pour une installation de transmission de puissance au moyen d'un courant continu à haute tension (HVDC),
équipement qui comporte une pluralité de branches (F11, F13, HP24, HP36) adaptées à différentes fréquences,
chaque branche (par exemple F11) comportant un condensateur (C11) principal et une inductance (L11), et
le condensateur (par exemple C11) principal dans chaque branche comportant une pluralité d'unités (C11₁ - C11₁₈) formant condensateurs connectées en série disposées dans un bâti sensiblement vertical,
**caractérisé en ce que**
les condensateurs (C11, C13, C24, C36) principaux pour au moins deux branches sont disposés dans un même bâti, chaque condensateur principal se trouvant dans une pile de condensateurs distincte,
les empilements étant interconnectés électriquement et mécaniquement à une extrémité, et **en ce que**
les empilements sont sinon séparés et disposés à une grande distance les uns des autres, de sorte que la distance d'isolation exigée est obtenue entre les empilements.

2. Equipement formant filtre suivant la revendication 1, **caractérisé en ce que** les extrémités supérieures des empilements sont interconnectées mécaniquement et électriquement.

3. Equipement formant filtre suivant la revendication 2, **caractérisé en ce que** les empilements sont interconnectés au moyen d'un bâti métallique (MF).

4. Equipement formant filtre suivant l'une quelconque des revendications 2 à 3, **caractérisé en ce que** les extrémités supérieures des empilements ont une borne commune à haute tension (HVT).

5. Equipement formant filtre suivant l'une quelconque des revendications précédentes, **caractérisé en ce que** des connexions (IS1-IS4) transversales isolantes électriquement entre les empilements sont disposées à une distance des extrémités des empilements.

6. Equipement formant filtre suivant l'une quelconque des revendications précédentes, **caractérisé en ce que** des empilements sont disposés inclinés les uns par rapport aux autres, de telle manière que les distances entre les empilements diminuent dans une direction vers l'extrémité où les empilements sont connectés les uns aux autres.

7. Equipement formant filtre suivant la revendication 6, **caractérisé en ce que** les extrémités inférieures des empilements sont disposées sur des plaques (FD13, FD36) de base à distance les unes des autres et **en ce que** les distances mutuelles des empilements diminuent dans une direction vers les extrémités supérieures des empilements, où les empilements sont connectés les uns aux autres.
